# EUROPÄISCHE PATENTSCHRIFT

(11) **EP 2 061 700 B1**
(45) Veröffentlichungstag und Bekanntmachung des Hinweises auf die Patenterteilung: **05.08.2015**
(21) Anmeldenummer: 07802023.7
(22) Anmeldetag: 31.08.2007
(51) Int. Cl.: B64D 11/06

(54) **SITZVORRICHTUNG**
SEAT DEVICE
DISPOSITIF DE SIÈGE

(30) Priorität: 15.09.2006 DE 102006043483
(43) Veröffentlichungstag der Anmeldung: 27.05.2009
(73) Patentinhaber: Recaro Aircraft Seating GmbH & Co. KG, 74523 Schwäbisch Hall (DE)
(72) Erfinder: MEJUHAS, Marsel, 74523 Schwäbisch Hall (DE)
(74) Vertreter: Daub, Thomas
(86) Internationale Anmeldenummer: PCT/EP2007/007605
(87) Internationale Veröffentlichungsnummer: WO 2008/031506

(56) Entgegenhaltungen:
- EP-A- 1 116 654
- EP-A- 1 160 125
- EP-A2- 0 105 741
- DE-A1- 4 121 660
- GB-A- 2 295 962
- US-A- 2 947 349
- US-A1- 2001 000 639
- US-A1- 2005 087 650
- US-B1- 6 213 427

## Beschreibung

### Stand der Technik

Die Erfindung geht aus von einer Sitzvorrichtung nach dem Oberbegriff des Anspruchs 1. Dokument US 2 947 349, welches als Merkmale des Oberbegriffs des Anspruchs 1 aufweist, wird als nächstliegender Stand der Technik angesehen.

Es sind Flugzeugsitzvorrichtungen mit einer ersten Sitzkomponente und mit einer zweiten Sitzkomponente bekannt, die häufig auch als Ottomane bezeichnet wird. Ferner umfassen die Flugzeugsitzvorrichtungen eine von einer Tischvorrichtung gebildete Tragevorrichtung mit einem bewegbar gelagerten von einem Tisch gebildeten Tragemittel, das in der Hauptsitzkomponente gelagert ist.

### Vorteile der Erfindung

Die Erfindung geht aus von einer Sitzvorrichtung, insbesondere einer Flugzeugsitzvorrichtung gemäß unabhängigen Anspruch 1.

Es wird vorgeschlagen, dass das Tragemittel über die zweite Sitzkomponente, d.h. an und/oder in der zweiten Sitzkomponente, wodurch eine hohe Flexibilität und ein hoher Komfort erreicht werden können. Dabei soll unter einer Lagerung außerhalb der ersten Sitzkomponente insbesondere verstanden werden, dass Lagerkräfte des Tragemittels nicht über die erste Sitzkomponente abgestützt werden, sondern über die zweite Sitzkomponente.

Die Tragevorrichtung weist eine Lagereinheit auf, über die das Tragemittel entlang zumindest einer Bahn verschiebbar gelagert ist. Die Tragevorrichtung kann besonders flexibel vorteilhaft verstaut und/oder auch flexibel in eine und insbesondere in mehrere komfortable Tragestellungen geführt werden, und zwar wenn das Tragemittel entlang wenigstens einer Bahn verschiebbar ist. Die Bahn, entlang der das Tragemittel verschiebbar ist, kann dabei gekrümmt und/oder geradlinig ausgeführt sein.

In einer weiteren Ausgestaltung der Erfindung wird vorgeschlagen, dass die Tragevorrichtung eine Lagereinheit mit einem Mehrfachauszug aufweist. Dabei soll unter einem Mehrfachauszug insbesondere ein Auszug verstanden werden, bei dem eine Bewegung durch zumindest zwei Bewegungen von unterschiedlichen Bauteilen zusammengesetzt ist, wie insbesondere ein Teleskopauszug. Durch eine entsprechende Ausgestaltung können vorteilhaft lange Bewegungsbahnen realisiert werden.

Ferner wird vorgeschlagen, dass die Tragevorrichtung eine Lagereinheit mit einer Fixiereinheit aufweist, mittels der das Tragemittel in zumindest zwei Tragestellungen fixierbar ist, wodurch die Tragevorrichtung vorteilhaft an verschiedene Randbedingungen angepasst und der Komfort weiter gesteigert werden kann. Die Fixiereinheit kann dabei in der Weise ausgeführt sein, dass zumindest in einem Bereich eine stufenlose Einstellung möglich ist, beispielsweise mit einer Bremseinheit, und/oder die Fixiereinheit kann ein oder mehrere Raststellungen aufweisen. Die Fixiereinheit kann ferner zur Fixierung in verschiedenen Schwenkstellungen und/oder entlang einer Bahn in verschiedenen Stellungen vorgesehen sein. Ferner soll unter einer Tragestellung insbesondere eine Nutzstellung des Tragemittels verstanden werden.

Weist die Sitzvorrichtung einen Fußraum und eine Lagerachse auf, die in einem Seitenbereich des Fußraums oder seitlich neben dem Fußraum angeordnet ist, kann eine Behinderung durch die Lagerachse vorteilhaft zumindest weitgehend verhindert werden. Dabei soll unter einem Seitenbereich eines Fußraums insbesondere ein Bereich verstanden werden, der sich ausgehend von einer Seitenbegrenzung bzw. einem Seitenrand des Fußraums weniger als 10 % einer Gesamtbreite des Fußraums in Richtung einer Mitte des Fußraums erstreckt. Dabei wird ein Fußraum insbesondere durch eine Seitenwand und/oder durch einen sich angrenzenden anderen Nutzraum, wie beispielsweise einen Fußraum einer weiteren Sitzvörrichtung oder eines Gangs, begrenzt. Die Lagerachse kann ferner eine Schwenkachse und/oder insbesondere eine materielle Achse sein, die zur Führung einer Komponente der Tragevorrichtung entlang einer Bahn vorgesehen ist.

Die Tragevorrichtung weist wenigstens ein Aufprallschutzmittel auf, wodurch die Sicherheit erhöht werden kann. Dabei kann das Aufprallschutzmittel von einem Dämpfungsmittel gebildet sein und/oder insbesondere von einem Mittel, das zur Erzielung einer von einer Hauptbewegung abweichenden Bewegung vorgesehen ist, wie beispielsweise von einem Lagermittel, das bei einem Aufprall über eine für einen Normalbetrieb vorbestimmten Bewegungsbereich hinausgeführt werden kann usw.

Ferner bildet das Aufprallschutzmittel vorzugsweise eine Sollbruchstelle, wodurch konstruktiv einfach ein Aufprallschutz erreicht werden kann.

Die Erfindung eignet sich besonders für eine von einer Tischvorrichtung gebildete Tragevorrichtung mit einem von einem Tisch gebildeten Tragemittel, jedoch auch für andere, dem Fachmann als sinnvoll erscheinende Tragevorrichtungen, wie beispielsweise für Tragevorrichtung mit einem Monitor, mit einem Flaschenhalter, mit einem Laptop usw.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Flugzeugsitzvorrichtung mit einer Tragevorrichtung in einer Verstauposition,
- Fig. 2: die Flugzeugsitzvorrichtung aus Figur 1 bei einer ersten Tragestellung der Tragevorrichtung,
- Fig. 3: die Flugzeugsitzvorrichtung aus Figur 1 bei einer zweiten Tragestellung der Tragevorrichtung und
- Fig. 4: die Flugzeugsitzvorrichtung aus Figur 1 bei einer dritten Tragestellung der Tragevorrichtung.

### Beschreibung des Ausführungsbeispiels

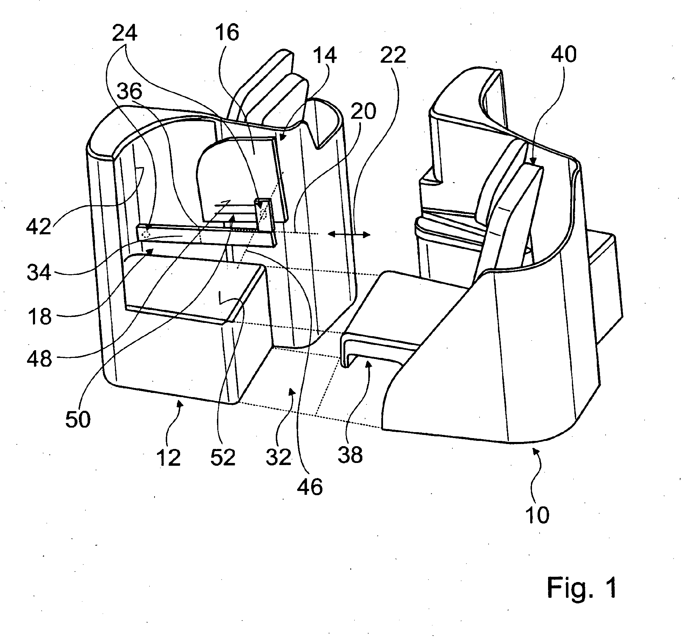

Figur 1 zeigt eine Flugzeugsitzvorrichtung mit einer ersten Sitzkomponente 10, die eine Sitzbodeneinheit 38 und eine Rückenlehneneinheit 40 aufweist. Ferner umfasst die Flugzeugsitzvorrichtung eine zweite Sitzkomponente 12, die eine Beinauflageeinheit mit einer Bein- bzw. Fußauflagefläche 52 aufweist, sowie eine von einer Tischvorrichtung gebildete Tragevorrichtung 14 mit einem von einem Tisch gebildeten Tragemittel 16, das über die bzw. an der zweiten Sitzkomponente mittels einer Lagereinheit 18 gelagert ist.

Die Lagereinheit 18 umfasst eine schienenartige Lagerachse 34, die in einem Seitenbereich eines gestrichelt angedeuteten Fußraums 32 der Flugzeugsitzvorrichtung an einer Seitenwand 42 der zweiten Sitzkomponente 12 verschiebbar entlang einer Bahn 22 gelagert ist. Das Tragemittel 16 ist gemeinsam mit der Lagerachse 34 und relativ zur Lagerachse 34 über eine an einer Unterseite 48 des Tragemittels 16 angeordnete Führungseinheit 50 beweglich entlang der Bahn 22 gelagert. Die Lagerachse 34 und die Führungseinheit 50 bilden einen Mehrfachauszug. Ferner ist das Tragemittel 16 an dem der ersten Sitzkomponente 10 zugewandten Ende der Lagerachse 34 um eine im Wesentlichen parallel zur Lagerachse 34 ausgerichtete Achse 20 und um eine senkrecht zu einer Abstellfläche 44 des Tragemittels 16 verlaufende Achse 46 schwenkbar gelagert.

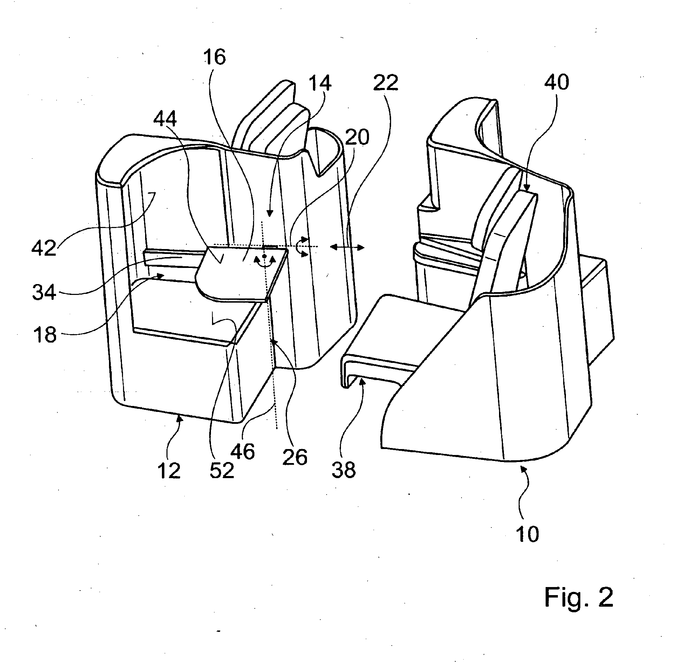

Figur 1 zeigt die Tragevorrichtung 14 in einer Verstauposition, während Figur 2 die Tragevorrichtung 14 in einer ersten Tragestellung 26 bzw. Ablagestellung zeigt. In der ersten Tragestellung 26 ist das Tragemittel 16 um die Achse 20 geschwenkt, so dass die Abstellfläche 44 im Wesentlichen in einer horizontalen Ebene zum Liegen kommt. Die Lagereinheit 18 weist eine Fixiereinheit 24 mit mehreren Rastmitteln auf, mittels derer das Tragemittel 16 in seiner Verstauposition und in mehreren Tragestellungen 26, 28, 30 bzw. Ablagestellungen fixierbar ist, und zwar insbesondere entlang der Bahn 22 und um die Achsen 20, 46 (Figuren 2 bis 4).

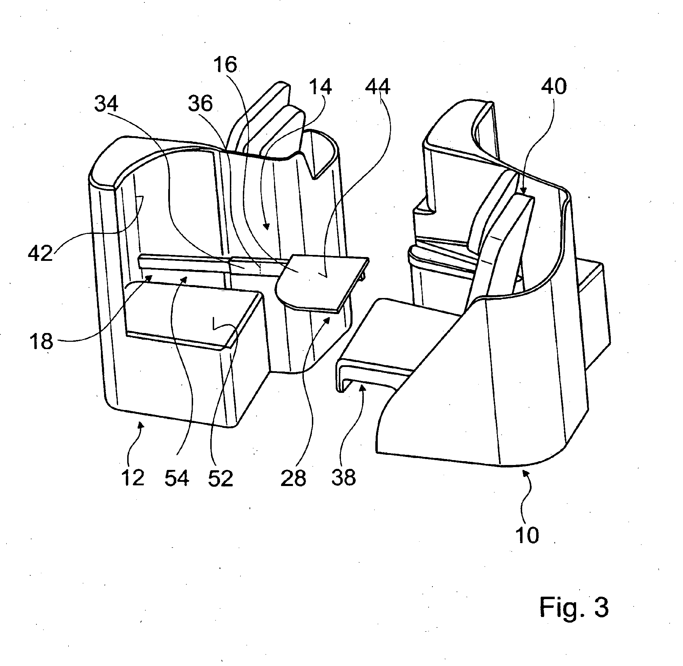

Figur 3 zeigt die Tragevorrichtung 14 in der zweiten Tragestellung 28, bei der das Tragemittel 16 gemeinsam mit der mittels einer an der Seitenwand 42 befestigten Führungseinheit 54 geführten Lagerachse 34 entlang der Bahn 22 in Richtung der ersten Sitzkomponente 10 verschoben ist.

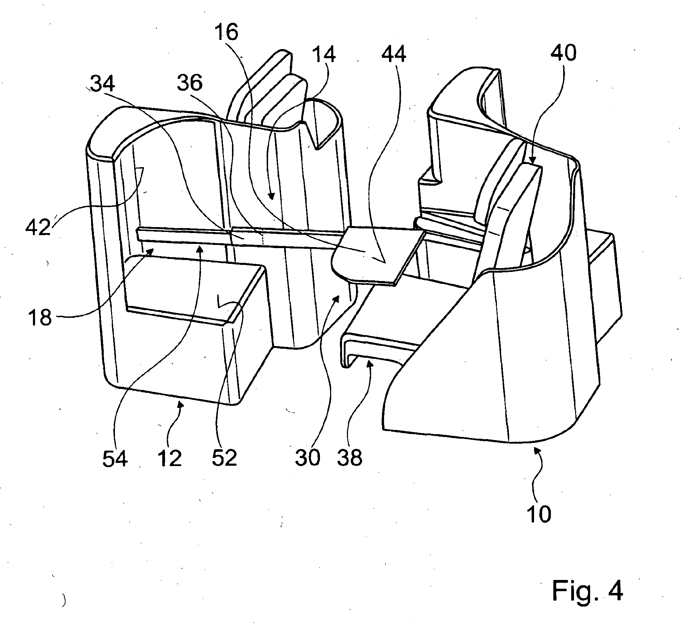

Ferner zeigt Figur 4 die Tragevorrichtung 14 in der dritten Tragestellung 30, bei der das Tragemittel 16 relativ zur Lagerachse 34 mittels der Führungseinheit 50 weiter entlang der Bahn 22 in Richtung der ersten Sitzkomponente 10 verschoben ist.

Die Fixiereinheit 24 ist dabei in der Weise ausgelegt, dass bei einer Bewegung aus der ersten Tragestellung 26 in Richtung der zweiten Tragestellung 28 zuerst ein der Lagerachse 34 zugeordnetes Rastmittel auslöst, bevor ein der Führungseinheit 50 zugeordnetes Rastmittel auslöst, so dass stets das Tragemittel 16 ausgehend von der ersten Tragestellung 26 gemeinsam mit der Lagerachse 34 zur Erzielung der zweiten Tragestellung 28 bewegt wird und anschließend das Tragemittel 16 ausgehend von der zweiten Tragestellung 28 über die Führungseinheit 50 in die dritte Tragestellung 30 geführt werden kann.

Bei einer Bewegung ausgehend von der dritten Tragestellung 30 in Richtung der zweiten Tragestellung 28 löst zuerst das der Führungseinheit 50 zugeordnete Rastmittel aus, bevor das der Lagerachse 34 zugeordnete Rastmittel auslöst, so dass stets das Tragemittel 16 ausgehend von der dritten Tragestellung 30 zuerst relativ zur Lagerachse 34 bewegt wird und anschließend das Tragemittel 16 gemeinsam mit der Lagerachse 34 in die erste Tragestellung geführt werden kann. Die Rastmittel weisen hierfür jeweils in entgegengesetzte Richtungen unterschiedliche Ausrastkräfte auf bzw. es sind in entgegengesetzte Richtungen je Rastelement unterschiedliche Kräfte aufzubringen, um ein Ausrasten zu erreichen.

Ferner weist die Tragevorrichtung 14 bzw. die Lagereinheit 18 ein von der Lagerachse 34 gebildetes Aufprallschutzmittel auf, das im Aufprallfall zur Erzielung einer von einer Hauptbewegung abweichenden Bewegung vorgesehen ist, und zwar, indem das Aufprallmittel eine Sollbruchstelle 36 bildet bzw. aufweist. Die Sollbruchstelle 36 ist vorzugsweise so gewählt, dass zumindest ein Teil der Lagereinheit 18, und zwar ein Teil der Lagerachse 34 gemeinsam mit dem Tragemittel 16 aus einem kritischen Bereich geführt werden kann.

**Bezugszeichen**

| | | | |
|---|---|---|---|
| 10 | Sitzkomponente | 52 | Bein- bzw. Fußauflagefläche |
| 12 | Sitzkomponente | | |
| 14 | Tragevorrichtung | 54 | Führungseinheit |
| 16 | Tragemittel | | |
| 18 | Lagereinheit | | |
| 20 | Achse | | |
| 22 | Bahn | | |
| 24 | Fixiereinheit | | |
| 26 | Tragestellung | | |
| 28 | Tragestellung | | |
| 30 | Tragestellung | | |
| 32 | Fußraum | | |
| 34 | Lagerachse | | |
| 36 | Sollbruchstelle | | |
| 38 | Sitzbodeneinheit | | |
| 40 | Rückenlehneneinheit | | |
| 42 | Seitenwand | | |
| 44 | Abstellfläche | | |
| 46 | Achse | | |
| 48 | Unterseite | | |
| 50 | Führungseinheit | | |

## Patentansprüche

1. Sitzvorrichtung, insbesondere Flugzeugsitzvorrichtung, mit einer ersten Sitzkomponente (10) und einer zweiten Sitzkomponente (12), die zur Beinauflage vorgesehen ist und eine Beinauflageeinheit mit einer Fußauflagefläche (52) aufweist, und einer Tragevorrichtung (14) mit einem bewegbar gelagerten Tragemittel (16), das außerhalb der ersten Sitzkomponente (10) gelagert ist,
**dadurch gekennzeichnet,**
**dass** die Tragevorrichtung (14) eine Lagereinheit (18) aufweist, über die das Tragemittel (16) entlang zumindest einer Bahn (22) verschiebbar gelagert ist, wobei das Tragemittel (16) über die zweite Sitzkomponente (12) gelagert ist und wobei die Tragevorrichtung (14) wenigstens ein Aufprallschutzmittel aufweist.

2. Sitzvorrichtung nach Anspruch 1,
**dadurch gekennzeichnet,**
**dass** die Tragevorrichtung (14) eine Lagereinheit (18) aufweist, über die das Tragemittel (16) um zumindest eine Achse (20, 46) schwenkbar gelagert ist.

3. Sitzvorrichtung nach einem der vorhergehenden Ansprüche,
**dadurch gekennzeichnet,**
**dass** die Tragevorrichtung (14) eine Lagereinheit (18) mit einem Mehrfachauszug aufweist.

4. Sitzvorrichtung nach einem der vorhergehenden Ansprüche,
**dadurch gekennzeichnet,**
**dass** die Tragevorrichtung (14) eine Lagereinheit (18) mit einer Fixiereinheit (24) aufweist, mittels der das Tragemittel (16) in zumindest zwei Tragestellungen (26, 28, 30) fixierbar ist.

5. Sitzvorrichtung nach einem der vorhergehenden Ansprüche, **gekennzeichnet durch**,
einen Fußraum (32) und wenigstens eine Lagerachse (34), die in einem Seitenbereich des Fußraums (32) oder seitlich neben dem Fußraum (32) angeordnet ist.

6. Sitzvorrichtung nach Anspruch 1,
**dadurch gekennzeichnet,**
**dass** das Aufprallschutzmittel zur Erzielung einer von einer Hauptbewegung abweichenden Bewegung vorgesehen ist.

7. Sitzvorrichtung nach Anspruch 6,
**dadurch gekennzeichnet,**
**dass** das Aufprallschutzmittel eine Sollbruchstelle (36) bildet.

## Claims

1. Seat device, in particular aircraft seat device, with a first seat component (10) and with a second seat component (12) which is provided for a leg rest and comprises a leg rest unit having a footrest surface (52), and with a carrying device (14) having a movably supported carrying means (16) that is supported outside the first seat component (10),
**characterized in that**
the carrying device (14) comprises a support unit (18), via which the carrying means (16) is slidably supported along at least one path (22), the carrying means (16) being supported via the second seat component (12) and the carrying device (14) comprising at least one crash protection means.

2. Seat device according to claim 1,
**characterized in that**
the carrying device (14) comprises a support unit (18), via which the carrying means (16) is supported such that it is pivotable around at least one axis (20, 46).

3. Seat device according to one of the preceding claims,
**characterized in that**
the carrying device (14) comprises a support unit (18) with a multiple pull-out.

4. Seat device according to one of the preceding claims,
**characterized in that**
the carrying device (14) comprises a support unit (18) with a fixation unit (24), by which the carrying means (16) can be fixated in at least two carrying positions (26, 28, 30).

5. Seat device according to one of the preceding claims,
**characterized by**
a foot space (32) and at least one support axis (34), which is arranged in a lateral region of the foot space (32) or laterally next to the foot space (32).

6. Seat device according to claim 1,
**characterized in that**
the crash protection means is provided to achieve a movement that differs from a principal movement.

7. Seat device according to claim 6,
**characterized in that**
the crash protection means implements a predetermined breaking point (36).

## Revendications

1. Dispositif de siège, notamment dispositif de siège d'avion, avec un premier composant de siège (10) et avec un deuxième composant de siège (12), lequel est prévu comme appui-jambe et présente une unité d'appui-jambe avec une surface de repose-pied (52), et avec un dispositif de soutien (14) possédant un moyen de soutien (16) supporté mouvablement hors du premier composant de siège (10),
**caractérisé en ce que**
le dispositif de soutien (14) présente une unité de support (18), par laquelle le moyen de soutien (16) est supporté déplaçablement le long d'au moins une trajectoire (22), le moyen de soutien (16) étant supporté par le deuxième composant de siège (12) et le dispositif de soutien (14) présentant au moins un moyen protégeant de choc.

2. Dispositif de siège selon la revendication 1,
**caractérisé en ce que**
le dispositif de soutien (14) présente une unité de support (18), par le biais de laquelle le moyen de soutien (16) est supporté ainsi qu'il est pivotable autour d'au moins un axe (20, 46).

3. Dispositif de siège selon l'une quelconque des revendications précédentes,
**caractérisé en ce que**
le dispositif de soutien (14) présente une unité de support (18) avec une rallonge multiple.

4. Dispositif de siège selon l'une quelconque des revendications précédentes,
**caractérisé en ce que**
le dispositif de soutien (14) présente une unité de support (18) avec une unité de fixation (24), par le biais de laquelle le moyen de soutien (16) peut être fixé dans au moins deux positions de soutien (26, 28, 30).

5. Dispositif de siège selon l'une quelconque des revendications précédentes,
**caractérisé par**
un espace-pieds (32) et au moins un axe de support (34), lequel est disposé dans une zone latérale de l'espace-pieds (32) ou latéralement à côté de l'espace-pieds (32).

6. Dispositif de siège selon la revendication 1,
**caractérisé en ce que**
le moyen protégeant de choc est prévu pour obtenir un mouvement différant d'un mouvement principal.

7. Dispositif de siège selon la revendication 6,
**caractérisé en ce que**
le moyen protégeant de choc constitue un point de rupture (36).
